# EUROPEAN PATENT APPLICATION

(11) **EP 4 151 451 A1**
(43) Date of publication of application: **22.03.2023**
(21) Application number: 22170053.7
(22) Date of filing: 26.04.2022
(51) Int. Cl.: B60L 53/14, B60L 53/31, B60L 53/62, B60L 53/63, B60L 53/64, B60L 53/65, B60L 53/67, B60L 58/12

(54) **METHOD AND NETWORK FOR CHARGING ELECTRICAL VEHICLES ON FERRIES**

(30) Priority: 27.04.2021 CH 4512021
(71) Applicant: Lymperopoulos, Ioannis, 8953 Dietikon (CH)
(72) Inventor: Lymperopoulos, Ioannis, 8953 Dietikon (CH)
(74) Representative: Frei Patent Attorneys

(57) **Abstract**

**An adaptive charging method** generates a **charging profile** for charging of electrical vehicles (EVs) on a ferry carrying vehicles from a limited **power source.** The charging profile comprises, for each of the EVs, a **vehicle charging power trajectory** over time. The method comprises:
• determining an **estimated future power availability trajectory,** that is, power available from the power source over time;
• determining an **estimated total energy demand** for the plurality of EVs;
• performing an optimisation procedure, to determine, for an **optimisation time window,** an **optimal charging profile** that minimises an **objective function** subject to constraints on the total power available, charging limit constraints imposed by the EVs and a time window in which each EV is present and can be charged.

## Description

The invention relates to the field of charging electrical vehicles (EVs), in particular on ferries.

Electric Vehicles (EVs) require specialized equipment to expediently charge their electric batteries with electric energy. Such equipment, commonly referred to as an "EV Charger", consists of power electronic systems that convert the power level of a given energy source (such as the power grid, renewable generation, etc) to a power level suitable for charging EVs. For medium to large scale applications (10s to 100s of vehicles) with business or public interest the cost of infrastructure, in terms of the quantity of EV Chargers required to supply power separately each vehicle, rises significantly.

The challenge arises from a case where a large number of deployed EV Chargers awaits in stand-by mode to provide power to incoming vehicles. This leaves a large number of the deployed infrastructure underutilized due to the stochastic arrival and departure times of EVs but also their varying energy needs and charging specifications. The large cost of ownership and maintenance of EV chargers affects adversely the price of EV charging for the drivers and users of the system. A system that addresses from its design these challenges can provide great value to medium and large-scale applications by significantly reducing the equipment needs for serving the EV charging demand.

There exist solutions that allow for one EV Charger to supply power to multiple EVs via several power outlets, however, all of these approaches provide power only sequentially in time and only from a single EV charger which limits their effectiveness. Moreover, the existing solutions come with a fixed number of power outlets that makes extensions or reconfiguration of the system very difficult, if not impossible. Finally, most of the existing solutions are designed as a fixed part to the EV charger, hence, they cannot be deployed in existing EV Charging stations.

US 10766370B2 shows a system for managing EV Charging in order to shape and shift or modify the total load of multiple EVs.

US10810804B2 shows a system and method for monitoring the charging status of multiple EVs.

US10850627B2 shows an EV charging system with multiple output connections that can sequentially charge multiple EVs.

US9889761B2 shows a network-controlled device for managing the charging or multiple vehicles at possibly different locations.

US8890473B2 shows a system for charging multiple EVs in a sequential fashion from different power outlets.

US8829851B2 shows a system for charging multiple EVs with different power cords from a single EV charger using various criteria which single EV to charge at a time.

US9156322B2 shows a charging cable system that can connect multiple charging cables on the same powerline.

US8981718B2 shows an EV charger with multiple power outlets that can be switched on or off according to requirements and allows a different, single EV to be charged at a time.

US8957634B2 shows a system for collaborating managing the charging at different locations for residential premises.

US9505318B2 shows a system for managing the charging of a fleet consisting of multiple EVs

It is an object of the invention to create an adaptive charging method and a charging network, in particular for charging a plurality of electrical vehicles (EVs) on a ferry carrying vehicles, which overcome the disadvantages mentioned above.

These objects are achieved by an adaptive charging method and a charging network according to the corresponding independent claims.

A **switching device** for charging an electrical vehicle (EV) comprises at least:
a **first power terminal** for connecting the switching device to a first power connection,
a **second power terminal** for connecting the switching device to a second power connection, and
an **EV power terminal** for connecting the switching device to an EV power cable for charging an electrical vehicle,
**power switches** arranged to selectively connect the power terminals,
a **control unit** arranged to control the power switches,
a **communications unit** configured to communicate with at least other switching devices,
an (optional) EV interface unit configured to communicate with an electrical vehicle connected to the switching device.

The power switches being arranged to selectively connect the power terminals means, for example, that the power switches are arranged to selectively connect the first power terminal with the second power terminal, the first power terminal with the EV power terminal, and the second power terminal with the EV power terminal. "selectively" means that the switching device is configured to switch a respective connection on and off, typically under control of a control unit. A connection between power terminals can be a multi-pole connection, that is, it comprises two or more electrical connections.

In embodiments, the power switches are arranged in a delta configuration. This can mean that a first power switch is arranged between the first power terminal and the second power terminal, a second power switch between the first power terminal and the EV power terminal, and a third power switch between the second power terminal and the EV power terminal.

In embodiments, the power switches are arranged in a Y configuration. This can mean that the first power switch is arranged between the first power terminal and a star point, the second power switch between the star point and the second power terminal, and the third power switch between the star point and the EV power terminal.

In embodiments, the EV interface unit is configured to communicate with the connected EV through wireless or wired data communication. Wired communication can be over power wires of a EV power cable connecting an EV to the EV power terminal, or over dedicated communication wires of the EV power cable. In embodiments, the EV interface unit is configured to exchange data between the EV and the control unit. In embodiments, the EV interface unit is configured to forward data to another switching device or an EV charger connected to the switching device. In embodiments, the EV interface unit is configured to connect communication lines from the EV with communication lines of one of the other power terminals. This allows to establish a wired connection for data communication between an EV charger and an EV being charged. In each case, the data communication typically allows to implement communication protocols used to coordinate the operation of an EV charger with the EV being charged. In embodiments, the EV interface unit is configured to detect the presence of an EV near a charging location associated with the switching device. In embodiments, the EV interface unit is configured to detect the presence of an EV connected to the switching device with an EV power cable.

In embodiments, the switching device is configured to control the power switches based on information received through the communications unit and optionally also through the EV interface unit.

As a result, the switching device can also be called an intelligent switching device and can be used to form a reconfigurable charging power network or modular switching system, which in turn allows for a better usage of resources such as EV chargers. The switching device can be implemented as a stand-alone device, physically distant and independent of an EV charger and/or of other such switching devices. By being able to communicate with other such switching devices, with a connected electrical vehicle and optionally with further devices or systems, it can form a charging network for adaptively charging multiple electrical vehicles by multiple EV chargers. Furthermore, the charging network is modular in that it can be easily modified by changing the topology of interconnections between the switching devices and/or adding switching devices and/or adding EV chargers.

In embodiments, there are two or more first power terminals and/or two or more second power terminals. In this case, there can be the multiple first power switches arranged to selectively connect any one of the first power terminals with any one of the second power terminals. Furthermore, there can be two or more second power switches arranged to selectively connect any one of the two or more first power terminals with the EV power terminal. And there can be two or more third power switches arranged to selectively connect any one of the two or more second power terminals with the EV power terminal.

In summary, the switching device, also called "Intelligent Switching Device" enables the formation of charging networks as "Reconfigurable Power Networks" for adaptively charging EVs by implementing:
- A **modular switching system** that allows for the formation of charging power networks that are easy to expand and reconfigure. This allows for a group of EV chargers (M) to charge a significantly larger number of EVs (N, with N>M) in parallel lifting the restriction of one EV charger per vehicle, or one EV charger dedicated to a specific group of power outlets.
- An **intelligent control system** embedded in the switching device that coordinates the "Charging Network" and enables safe and optimal operation. The intelligent control system can use optimization and AI methods to coordinate the switching devices and the EV chargers with the vehicles to allow for an efficient and optimal charging of the EVs.
- A **Planning System** that optimizes EV charging when power availability varies through time, such as in shipping applications. The Planning system coordinates charging of EVs for custom applications in which the Charging Station has a varying and possibly stochastic supply of power, for example on-board of ships, such as ferries carrying EVs that are charged during a voyage of the ship between ports.

The charging network comprises at least two switching devices according to one of claims to, each switching device being connected,
- at its first power terminal via a first power connection to another switching device or a first EV charger,
- at its second power terminal via a second power connection to a further switching device or a second EV charger,
the switching device being configured for its EV power terminal to be connected via an EV power cable to an electrical vehicle.

The power connections typically are made with multi-pole cables that can carry a charging current. Such currents typically are between 12 A and 10'000 A, in particular between 16 A and 10'000 A, in particular between 50 A and 1'000 A, in particular between 100 A and 1'000 A. Charging voltages typically are between 100 V and 10'000 V, in particular between 200 V and 1'000 V.

In embodiments, the at least two switching devices are distanced from one another by at least one metre, in particular by at least two metres. This can correspond to placement of switching devices distributed along a row of parking spaces.

In embodiments, in the charging network two or three or more switching devices are arranged in a linear or series configuration, with a first switching device being connected to the first EV charger, a last switching device being either connected to the second EV charger or being open-ended, that is, with one power terminal not connected, and zero or more intermediate switching devices each being connected to two other switching devices.

This makes it possible to daisy-chain switching devices, and to selectively power connected electrical vehicles from a single EV charger, or from one of two EV chargers.

In embodiments, a power connection between at least three switching devices is a star connection. In other words, the power connection connects, for each of the at least three switching devices, one respective power terminal of the switching device to a common star node.

This allows to create a branched topology of the switching devices and their connections. In other words, respective power terminals of the at least three switching devices are connected with one another. The power connection between the at least three switching devices thus is a star connection.

In embodiments, at least two switching devices are connected in a parallel arrangement, that is, with their first power terminals being connected to one another, and their second power terminals being connected to one another. Similarly, two or more linear arrangements of switching devices can be connected in a parallel arrangement.

Such connections between switching devices can provide a quasi-arbitrary topology of switching devices and their interconnections. Such topologies can allow for a high flexibility in assigning EV chargers to electrical vehicles.

In embodiments, at least one of the switching devices has two or more first power terminals and/or two or more second power terminals, and is connected to two or three or more other switching devices by corresponding power connections.

This allows to create a structure of the charging network that is even more adaptive. That is, that power connections between switching devices can be controlled in a more selective or differentiated manner, implementing a larger set of connection topologies, as compared to when three or more switching devices are connected by a star connection.

In embodiments, the charging network is configured to perform a method for optimising operation of the charging network, and to distribute a computational effort for performing the method over processing units of the switching devices of the charging network.

This allows to implement the charging network as an autonomous entity, without the need for further processing units. The processing units form a distributed computing system. One of the processing units can be assigned the role of a master node, coordinating the remaining processing units.

In other embodiments, the method is performed by a dedicated processing unit associated with the charging network, or by a cloud computing service.

In embodiments, the charging network is installed on a ferry for carrying vehicles, and comprises movable connection devices, the movable connection devices being arranged to be moved to a charging position corresponding to a position of an electrical vehicle to be charged,
in particular wherein the movable connection devices are arranged to be moved along a linear mounting, in particular a rail,
in particular wherein the movable connection devices are movable by means of a drive system.

In embodiments, the connection devices are switching devices as described herein. In other embodiments, other physical structures than the charging networks described herein are used to implement the charging network. For example, such a charging network can distribute electrical power through a DC network at a network DC voltage, with the movable connection devices comprising DC-DC converters for adapting the network DC voltage to a charging DC voltage required by an electrical vehicle connected to the connecting device.

This allows to move the connection or switching devices to the location of the electrical vehicle. This is especially advantageous in situations where parking spaces can be used both by electrical vehicles and other vehicles, such as on ferries. This eliminates the need to force electrical vehicles to specific parking spaces, or to equip all parking spaces with charging outlets.

The method for operating a charging network comprises the steps of
- determining a **topology** of the charging network;
- determining switching devices associated with electrical vehicles to be charged by the charging network, and determining an **energy demand** of these electrical vehicles;
- determining **power availability** from the EV chargers;
- performing an optimisation procedure, to determine a **charging plan,** the charging plan defining **within an optimisation time window** a topology of power flow through the charging network, the topology of power flow being defined by a status of the power switches in the switching devices, and the topology of power flow varying over time, such that the charging plan minimises an **objective function.**

This allows to selectively connect the EV chargers to different electrical vehicles, and to adapt these connections according to the requirements of the electrical vehicles and higher-level information such as schedules, cost objectives etc. This supports the move from the dominant "one charger - one EV" paradigm to a "few chargers - many EVs" paradigm.

The topology of the charging network can include the topology defined by the switching devices, EV chargers and their power connections. It can further include changes to this topology by faults that make power connections and/or EV chargers unavailable.

An electrical vehicle being associated with a switching device, for the electrical vehicle to be charged by the charging network, can mean that the electrical vehicle is already connected to the charging network. Alternatively, it can mean that the electrical vehicle is currently not connected to the charging network, but it is known that it will be connected at a future time. This can be the case when a vehicle's schedule is known in advance.

An energy demand of an electrical vehicle typically is an amount of energy needed to charge the electrical vehicle to a targeted "stage of charge", in particular to be fully charged.

In embodiments, an expected presence of an electrical vehicle to be charged (arrival-departure schedule), and/or an energy demand can be retrieved from information provided by drivers and/or from an internal control system of the electrical vehicle and/or from a scheduling system and/or from estimation methods based on statistics.

Power availability of an EV charger typically is a maximum available power that it can deliver. Optionally it can include variations in the maximum available power that are expected to take place during the optimisation time window. Such variations can be due, for example, to scheduled maintenance, expected availability of power from solar or wind generation, etc. Power availability can be limited by limitations of a battery of an electrical vehicle connected to the charger.

In embodiments, the optimisation procedure is performed subject to one or more of the following constraints:
∘ at each point of time in the optimisation time window, and for each EV, the vehicle charging power is limited by **charging limit constraints** imposed by at least one of the EV itself and a charger charging the EV;
∘ for each EV, the vehicle charging power is nonzero only during a **charging time window.**

In embodiments, the optimisation procedure further takes into account one or more of
- a state of a power sources powering the EV chargers, in particular costs of energy, in particular costs varying over time;
- a state of the connected and expected electrical vehicles, in particular one or more of a type of battery, a maximum power-rating for charging, an initial state-of-charge, an expected schedule at which the electrical vehicle will be connected to and disconnected from the charging network.

Different solutions can be ranked according to operator criteria according to further goals. Further goals can be related to aspects such as client satisfaction, profit maximization, reduction of cost-of-energy, etc.

This allows to implement an **intelligent control system (ICS),** based on the switching devices and optionally with additional data processing units. The ICS coordinates the switching devices for efficient and optimal charging. That is,
- the charging network adapts the power flow topology from EV Chargers to EVs to circumstances;
- the structure of connections between switching devices can change, for example, when due to extension of the charging network or due to faults, and the ICS will automatically adapt operation of the charging network;
- multiple electrical vehicles can be charged at the same time;
- idle time of EV chargers is reduced as they are connected to multiple electrical vehicles in turn.

If power availability varies over time, the optimisation will vary the allocation of charging capacity to electrical vehicles accordingly.

Methods used to solve the optimisation problem can be, for example: stochastic optimisation, genetic algorithms, machine learning algorithms, the simplex algorithm, interior point methods, semidefinite programming, dynamic programming, mixed integer programming etc...

If the computational effort is distributed over the switching devices, then decentralised optimisation and machine learning methods can be used.

Design variables, that is, variables modified by the optimisation, can be on various levels, and a subset or all of these design variables can be used, the others remaining fixed:
1. Lowest Level: switching connections in the switching devices 1.
2. Intermediate Level: decide which electrical vehicles 31 are to be charged, and decide which EV chargers 2 provide power to which electrical vehicle 31. The configuration allows potentially for multiple EV Chargers 2 to provide power to any of the connected electrical vehicles 31. Further variables can be a schedule when to start and when to stop charging each electrical vehicle 31.

**The adaptive charging method is** for generating a **charging profile** for charging a plurality of electrical vehicles (EVs) on a ferry carrying vehicles by a **charging system** that derives power from a **power source,** the charging system comprising one or more **chargers,**
the charging profile comprising, for each of the plurality of EVs, a **vehicle charging power trajectory** over time;
the method comprising the steps of
   - determining an **estimated future power availability trajectory** that specifies an estimated available maximal power that is available from the power source over time;
   - determining an **estimated total energy demand** for the plurality of EVs;
   - performing an optimisation procedure, to determine, for an **optimisation time window,** an **optimal charging profile** subject to one or more of the following constraints:
      ∘ at each point of time in the optimisation time window, a total power delivered by the power source to the charging system is lower than the estimated power availability;
      ∘ at each point of time in the optimisation time window, and for each EV, the vehicle charging power is limited by **charging limit constraints,** in particular wherein the charging limit constraints are imposed by at least one of the EV itself and a charger charging the EV;
      ∘ for each EV, the vehicle charging power is nonzero only during a **charging time window.**

In this manner, it is possible to optimise the charging of the EVs in the course of their stay on the ferry, taking onto account variations in the power availability. The variations are caused by the fact that the power available from the power source is limited and has to be shared with other power consumers that have a higher priority and whose power requirements vary over time.

In embodiments, the optimal charging profile minimises an objective function subject to one or more of the constraints listed above.

At each point in time, the total power delivered is the sum of the power delivered to the EVs. Similarly, the sum of the vehicle charging power trajectories over time; over all of the plurality of EVs, defines the total required charging power trajectory over time.

The charging time window specifies a time window in which an electrical vehicle is available for charging. It is, in general, individual for each electrical vehicle to be charged. Such a charging time window can be, in an isolated grid on land, such as in an off-grid mining location, given by a system scheduling operation of electrical vehicles. A charging time window can also differ between vehicles on a ferry, if they do not all board or leave together. The charging time window typically is a subset of the optimization time window.

In embodiments, the charging time window is the same for all EVs considered, and in particular is the same as the optimisation time window.

This typically occurs on a ship in which all electrical vehicles board and leave together.

In embodiments, the step of determining the estimated future power availability trajectory comprises the steps of a **scenario generator** determining the estimated future power availability trajectory by adapting **reference power availability trajectories** to a **voyage schedule,**
in particular by one of
- retrieving a reference power availability trajectory and adapting it according to the voyage schedule;
- retrieving a reference power availability trajectory recorded on a previous voyage with the same voyage schedule or averaged over multiple previous voyages with the same schedule;
- determining the estimated future power availability trajectory by means of **current voyage parameters** input to a machine learning system trained to associate reference power availability trajectories recorded on previous voyages with corresponding **previous voyage parameters,** voyage parameters comprising at least a voyage schedule and one or more of
   ∘ weather prediction data;
   ∘ ship maintenance data;
   ∘ power consumption measurements.

Weather prediction data can comprise numeric values representing one or more predicted weather parameters such as temperature, precipitation, wind speed, etc. Such parameters can affect the use power by the vessel, and thereby the level of power that remains available for charging.

Ship maintenance data can comprise a schedule when power consuming units of the vessel are to be in operation or not.

Power consumption measurements comprise measurements of the actual power consumption as the voyage progresses. This can allow to adapt the estimated future power availability.

In embodiments, a voyage schedule comprises at least a time in which a vessel is in a first port, a navigation time, and a time during which the vessel is in a second port.

In embodiments, adapting the reference power availability trajectory according to the voyage schedule is done by transforming or scaling it according to one or more of the times specified by the voyage schedule.

In embodiments, the step of determining the estimated total energy demand for the plurality of EVs comprises the steps of a **demand estimator** determining the estimated total energy demand as the sum of an **estimated energy demand** for each of the plurality of EVs,
in particular, wherein the estimated energy demand is represented by a **demand probability estimation,**
and further by, for each of the plurality of EVs, determining its estimated energy demand from **vehicle data,** the vehicle data comprising
   - an estimated or measured vehicle time of arrival;
   - an estimated or measured "Stage of Charge" (SoC) at arrival;
   - a targeted "Stage of Charge" at departure (disembarking);
   - a vehicle type and specifications;
and in particular by determining the estimated energy demand by one or more of
   - summing, over all vehicles, a difference between the state of charge at departure and at arrival;
   - scaling or transforming measured energy demand from previous voyages according to current vehicle data;
   - by means of the vehicle data input to a machine learning system trained to associate energy demand recorded on previous voyages with corresponding previous vehicle data.

In embodiments, scaling or transforming measured energy demand from previous voyages is done on the basis of a stated energy demand for these previous voyages and the stated energy demand for the present voyage.

Machine Learning with, for example, Neural Networks allows for non-linear scaling/transformation of a "reference trajectory" without explicitly defining the "form" of this non-linear relationship.

In embodiments, a machine learning system estimates the demand of individual vehicles, and then demand is summed. Alternatively, the machine learning system works on aggregated vehicle data and outputs the total demand.

In embodiments, the adaptive charging method comprises the steps of, as the charging takes place during the optimisation time window, **iteratively repeating** the optimisation procedure, with as additional input measurements of at least an **actual power availability** measured up to a current point in time, thereby in each iteration determining an updated optimal solution for the charging profile.

This allows to adapt the charging profile to changing circumstances that are reflected by the actual power availability and can be used to update the estimated future power availability trajectory for the remainder of the voyage. The actual power availability is complementary to the actual power consumption of the vessel, their sum being the maximum generation capacity of the vessel's electricity supply.

In embodiments, the optimisation procedure takes into account an objective function that is a function of an amount of fuel consumed to generate electricity.

In embodiments, the objective function comprises a relationship between specific fuel consumption and a load of one or more generators constituting the power source that has one or more minima.

This allows to take into account a load dependent generator efficiency.

The function of the amount of fuel can comprise one or more of a monetary cost of fuel, costs associated with maintenance, which in turn is related to duration (hours of operation), and optionally a level of operation (partial load - full load).

While the adaptive charging method has been described herein in the context of a ferry carrying vehicles, it is not limited to this context but can also be applied in other islanded networks in which the power available from the power source is limited and has to be shared with other power consumers.

In an embodiment, a computer program for the method for operating the charging network or a computer program for the adaptive charging method is loadable into an internal memory of a digital computer or a computer system, and comprises computer-executable instructions to cause one or more processors of the computer or computer system execute the method for operating the charging network or the adaptive charging method. In another embodiment, a computer program product comprises a computer readable medium having the computer-executable instructions recorded thereon. The computer readable medium preferably is non-transitory; that is, tangible. In still another embodiment, the computer program is embodied as a reproducible computer-readable signal, and thus can be transmitted in the form of such a signal. A method of manufacturing a non-transitory computer readable medium comprises the step of storing, on the computer readable medium, computer-executable instructions which when executed by one or more processors of a computing system, cause the computing system to perform the method steps of one of the methods described herein.

Further embodiments are evident from the dependent patent claims.

The subject matter of the invention will be explained in more detail in the following text with reference to exemplary embodiments which are illustrated in the attached drawings, which schematically show:
- Figure 1: a switching device with a delta arrangement of power switches;
- Figure 2: a switching device with a Y-arrangement of power switches;
- Figure 3-8: charging networks with different topologies and in different switching states;
- Figure 9-10: MIMO analogues to the switching devices of Figures 1 and 2;
- Figure 11-12: charging networks using MIMO switching devices;
- Figure 13: power requirements in a ship over time;
- Figure 14: a Real-Time Charging Planner;
- Figure 15: a characteristic curve of engine with generator;
- Figure 16: a characteristic curve of a combination of engines;
- Figure 17: a scenario generator; and
- Figure 18: a demand probability estimator.

In principle, identical or functionally identical parts are provided with the same reference symbols in the figures.

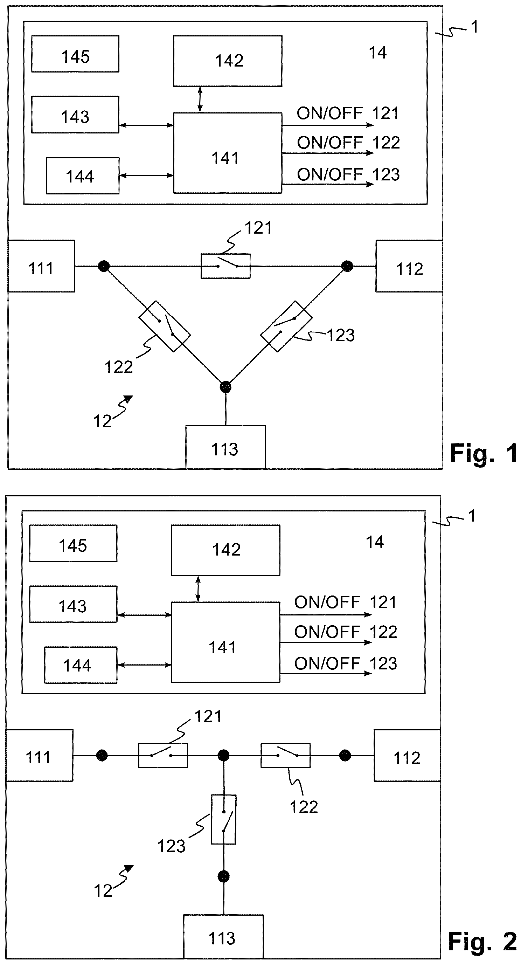

Figures 1 and 2 schematically show switching devices 1 with different configurations of power switches 12. Such a switching device 1 constitutes an "Electric Vehicle Connection Box" (EVCB), a device that enables the formation of EV charging networks 3 with various topologies according to the requirements of the EV charging station operator.

The main components of the switching device 1, which will also be called EVCB herein, are:
1) An electrical circuit comprising
   a. Three switching components or power switches 12: a first power switch 121, second power switch 122 and third power switch 123 connected in a delta configuration.
   b. An input electrical cable with its respective outlet or first power terminal 111.
   c. An output electrical cable with its respective outlet or second power terminal 112.
   d. An electric vehicle (EV) cable with its respective outlet or EV power terminal 113. The three terminals are collectively referred to as power terminals 11.
2) A control unit 14 comprising
   a. A processing unit 141 (CPU or Microprocessor or Microcontroller or PLC) that controls the power switches 12.
   b. A wireless communication unit 142 that enables communication of the switching device 1 or EVCB to the outer world and other EVCBs by exchanging information regarding the energy usage profiles and the time schedule of a connected EV 31.
   c. Optionally, an EV interface unit 143 which implements the communication protocol between the connected EV electrical vehicle 31 and the switching device 1.
   d. A memory unit 144 where software running in the processing unit and relevant data are stored.
   e. A power supply unit or board power supply 145 that can be either a battery or a connection to the power grid that powers the components of the control unit 14.

The operation of the switching device 1 is determined by the configuration of its switches, i.e., the combination of their ON/OFF states where ON denotes a closed circuit that conducts current through the switch while OFF an open circuit that does not conduct current through the switch. In Table 1, different modes of operation are described, according to the following two criteria:
1. Charge EV: Denotes which source of power used to charge the connected EV. This source can either be the input cable or the output cable.
2. Act as circuit breaker: When Yes, the input cable is electrically isolated from the output cable; when No, the input and output cables are electrically connected.

**Table 1. Example of Operating Conditions of EVCB**

| Power Switch 121 | Power Switch 122 | Power Switch 123 | Charge EV Source | Circuit Breaker Operation |
|---|---|---|---|---|
| **OFF** | ON | OFF | Input Cable | Yes |
| **OFF** | OFF | ON | Output Cable | Yes |
| **OFF** | ON | ON | **Not allowed** | **Configuration** |
| **OFF** | OFF | OFF | No | Yes |
| **ON** | ON | OFF | Input Cable | No |
| **ON** | OFF | ON | Output Cable | No |
| **ON** | ON | ON | **Not allowed** | **Configuration** |
| **ON** | OFF | OFF | No | No |

**Figure 2** shows an alternative, but equivalent in respect to its operation principles, electrical configuration of the EVCB in which the power switches 12 are configured in a Y-connection (or wye connection).

As the EVCB in delta configuration, the ECVB in wye configuration can either charge the EV or act as a circuit breaker depending on the state (ON or OFF) of its Power Switches 12.

**Table 2. Example of Operating Conditions of EVCB in wye configuration**

| Power Switch 121 | Power Switch 122 | Power Switch 123 | Charge EV Source | Circuit Breaker Operation |
|---|---|---|---|---|
| **ON** | OFF | ON | Input Cable | Yes |
| **OFF** | ON | ON | Output Cable | Yes |
| **ON** | ON | ON | Input or Output Cable | No |
| **OFF** | OFF | OFF | No | Yes |
| **OFF** | ON | OFF | No | Yes |
| **ON** | ON | OFF | No | No |

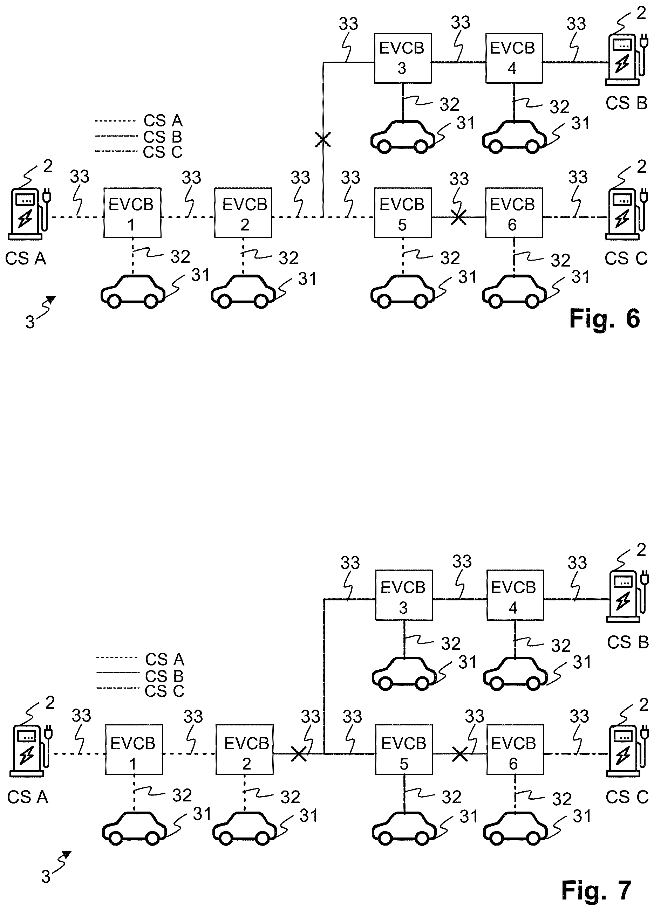

The core of constraints expressed in the table is that "no two EV chargers can provide power at the same time at the same line segment". Only one EV charger powers each line segment at each time. On the other hand, one EV charger can power multiple line segments, as shown in **Figures 6 to 7****.**

It now is described how the EVCB device can be utilized to create EV Charging Networks of arbitrary topology in which the EVs controlled by the EVCB devices can be charged by multiple EV Chargers.

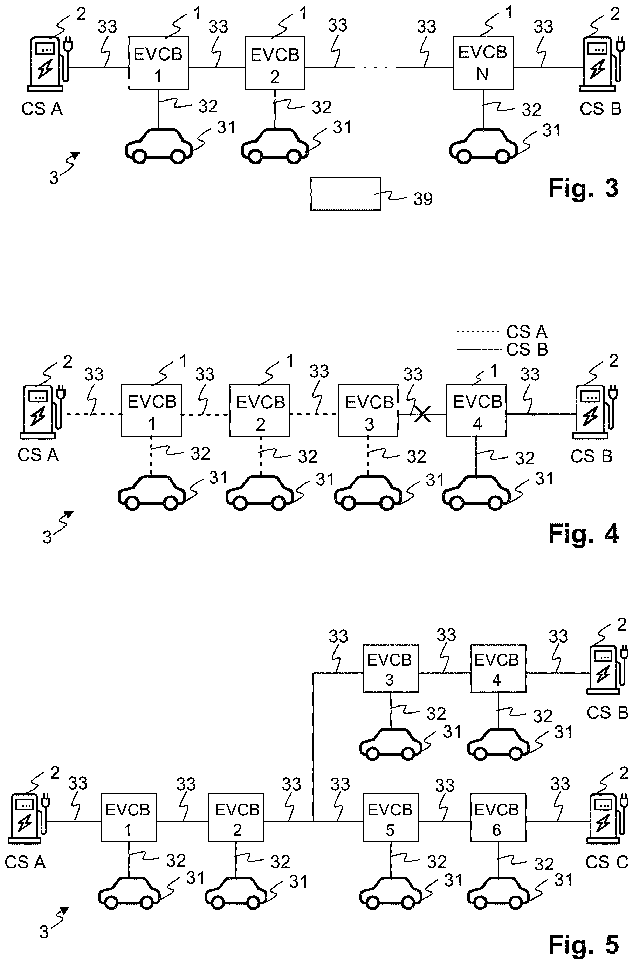

**Figure 3** shows a Charging Network comprising two EV Chargers CS A and CS B, and a number N of EVCB devices connected in series. In each EVCB device, a different EV is connected, the charging of which is completely controlled by the EVCB device. A supervisory control system 39 can be arranged to communicate with the switching devices 1. The switching devices 1 are connected to one another by power connections 33, and each switching device 1 can be connected to a electrical vehicle 31 by an EV power cable 32.

Due to the operation of the EVCB devices, as explained in Table 1, any EV connected to the charging network can be charged by using power either only from EV Charger CS A or EV Charger CS B. To ensure that EV Charger CS A is always electrically isolated from EV Charger CS B, one of EVCB devices is demanded to be in breaker mode. As an example, in **Figure 4****,** a serial network of two EV chargers and four EVCB devices is shown in which EVCB 3 is in breaker state (lines for which the current is switched off are marked with an X). This allows CS A to charge EVs connected to EVCB 1 and 3 while CS B charges the EV connected to EVCB 4. Notice that EVCB 2 is bypassed without charging its connected EV, which shows the flexibility of the EVCB devices.

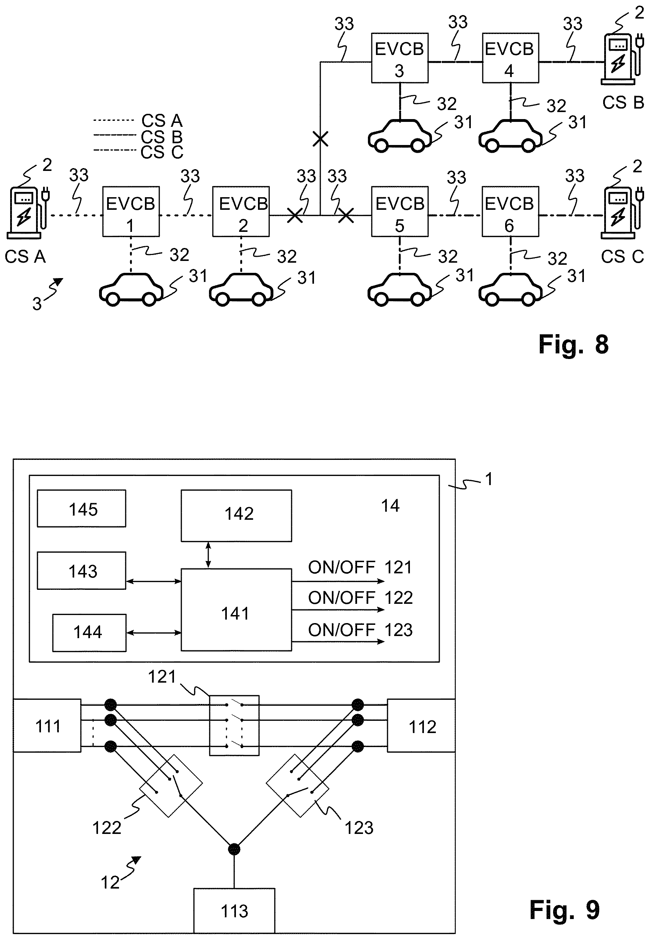

Using the EVCB devices, complex EV Charging Power Networks can be realized, as shown in **Figure 5****.** Here, any EV in the network can be charged by any of the EV Chargers in the network by appropriately setting the EVCBs switches 12. For instance, the EV connected to EVCB 5 can be charged by
- CS A if EVCB 3 and EVCB 6 act as circuit breakers, as shown in **Figure 6****.**
- CS B if EVCB 2 and EVCB 6 act as circuit breakers, as shown in **Figure 7****.**
- CS C if EVCB 2 and EVCB 3 act as circuit breakers, as shown in **Figure 8****.**

Multiple EVs electrically connected to the same EV Charger, via their respective EVCBs, can be charged in parallel (and not only one after the other). By varying the switches in each of the EVCBs different parallel configurations can be attained.

To build arbitrary complex EV Charging Networks, the single input single output EVCB presented so far is extended to one that can have multiple first power terminals 111 and multiple second power terminals 112, which is depicted in **Figure 9****,** and referred as MIMO - EVCB.

Compared to the EVCB presented so far, the MIMO-EVCB differs in having
1) first power switches 121 that can connect any first power terminal 111 with any second power terminal 112. The representation of the first power switches 121 in **Figure 9** is simplified.
2) second power switches 122 that can connect any first power terminal 111 to the EV power terminal 113.
3) third power switches 123 that can connect any second power terminal 112 to the EV power terminal 113.

The control unit 14 of the MIMO-EVCB can have the same structure but its processing unit 141 is now responsible to send ON/OFF signals to power switches 12.

The operating principle of the MIMO-EVCB is an extension of the EVCB, considering all the possible combinations of ON/OFF states of the Power Switches 12. In particular, for any number of M inputs and N outputs of the MIMO-ECVB, a table similar to Table 1 can be constructed that describes from which input or output cable the connected EV is charged and which input, and output cable are electrically connected.

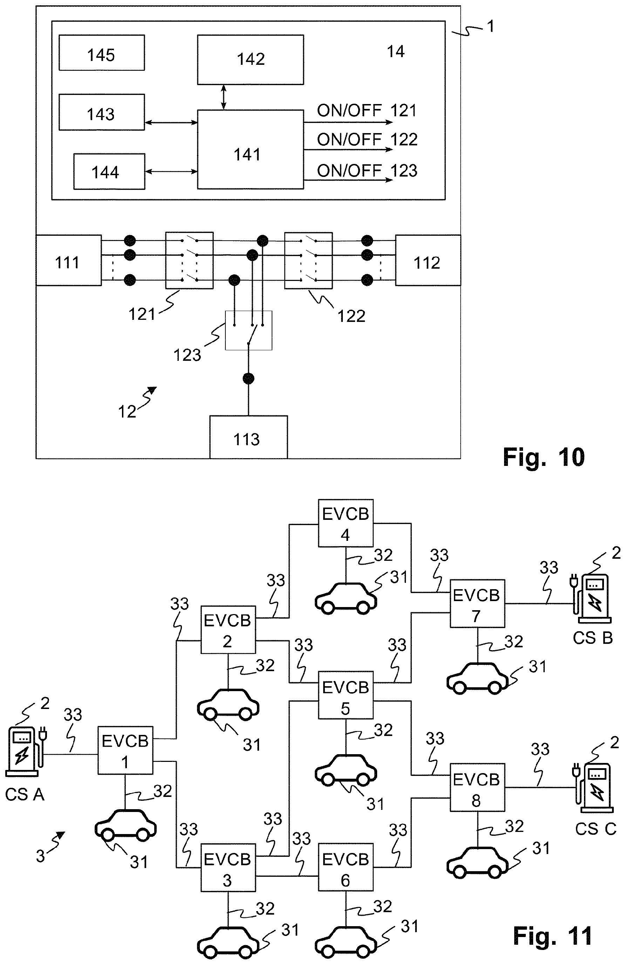

An alternative configuration, but equivalent in terms of operation principles, of the MIMO EVCB is the one depicted in **Figure 10** in which the electrical connection of the power switches 12 is in a Y-configuration (or wye configuration).

Compared to MIMO-EVCB, the MIMO-EVCB in wye configuration differs in having
1) first power switches 121 that can connect any first power terminal 111 to any middle point junction.
2) second power switches 122 that can connect any second power terminal 112 to any middle point junction.
3) third power switches 123 that can connect any middle point junction to the EV power terminal 113.

Exploiting the MIMO-EVCB devices, any complex structure of EV charging network, with numerous EVs connected to it, can be realized. An example of such a complex network with mesh structure is shown in **Figure 11****.** There, MIMO-EVCBs are combined with EVCBs to structure the network.

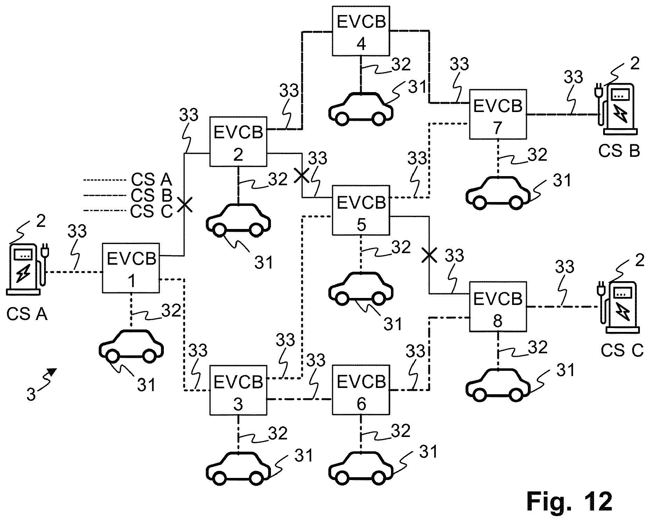

As an example of the configurability of the complex EV Charging Power Network, **Figure 12** shows an instance of operation at which the EVs connected to EVCB 1, 5 and 7 are charged by EV Charger CS A, the EVs connected to EVCBs 2 and 4 are charged from EV Charger CS B, and the EVs connected to EVCBs 3, 6 and 8 are charged from EV Charger CS C.

A control system (also called Intelligent Control System or ICS) for operating the EV Charging Networks 3 formed by EVCBs 1 as in the preceding examples can run on:
- The computational and communication resources of each EVCB interconnected to the Charging Network. The various EVCBs can run decentralized optimization and machine learning (ML) methods that converge to an optimal solution by combining their computational resources and communicating their intermediate results until a final consensus is reached.
- A selected EVCB can run as the master node that hosts the Intelligent Control System, while the rest of the EVCBs relay information to it about their current and expected status. The master EVCB solves the optimization or ML problem and broadcasts wirelessly the results (e.g. charging plans) to the rest of the EVCBs to be executed.
- A dedicated computational system or supervisory control system 39 that is physically located on site can run the Intelligent Control System, playing the role of the master EVCB as described before, but without having any connected vehicles to it.
- An online, cloud based and remotely located computational system can run the Intelligent Control System, playing the of the master EVCB as described before and relaying the results to the various Charging Networks comprised of EVCBs at various locations.

In configurations in which computational resources are combined, corresponding methods for solving an optimization problem in a distributed fashion involving a number of autonomous processing entities can be used. For example, the alternating direction method of multipliers (ADMM) can be used.

Each EVCB transmits to the Intelligent Control System, according to the electrical vehicle 31 connected to the EVCB, the EV's type and specifications, state of charge and information about its charging schedule, if available. Transmission can be wire-based, wireless, and/or by powerline communication. The charging schedule can be information about the time during which the electrical vehicle 31 is expected to be connected. This information can be derived from user input, a scheduling or booking system, or an estimation by the ICS, depending on the setting, such as airport parking, ferry, shopping centre, fleet management, etc.

The Intelligent Control System can receive information about the
- State of the EV Charging Network (such as topology, availability of power lines, maintenance schedules, faults, etc);
- State of the Power Source (costs of energy, availability of power, etc)
- State of the interconnected and expected EVs (type of battery, state-of-charge, power-rating, expected schedule, etc);
- Goals of the Station Operator (client satisfaction, profit maximization, reduction of cost-of-energy, etc.);
and uses this information to formulate an optimization problem that has as objective the goals of the station operator and as output the charging plans in time for each EVCB. Due to the capacity of the Charging Network to provide parallel charging to two or more EVs according to the Network Topology and the Switch status of each EVCB, but also the option to receive energy from different EV chargers at the same network, there can be different solutions to achieve the desired results. The Intelligent Control System via the optimization problem ranks the different solutions and selects the one that is closer to the Goals of the Station Operator (such as maximizing EV driver's satisfaction, shaving grid power peak, etc.).

The EVCBs receive the charging plans and coordinate their switches to achieve them. The EVCBs forming the charging network can communicate between them to solve conflicts (such as two or more EV Chargers supplying power to the same EV outlet) arising from faults and use their internal intelligence to resolve them by coordinating their switches.

The overall result is to minimize the "idle" mode of an EV charger and reduce inefficiencies. A common fast-charger (> 50 kW) costs around 25K EUR (there is an AC/DC converter inside) and usually can charge one (or at best two) EVs at the same time. The EVCB is expected to cost a fraction and allows to connect virtually "all" EV chargers to "all" EVs.

As a use case, consider a large retail store. Customers might stay from 1h to 4h, might request +50 km of charging range or +200 km of charging range. If they connect randomly to the available EV chargers, then a fast-charger can be used for 4h to provide only 50km of range (which can be done in 30 min). The EVCB allows the available power to be "diverted" where needed, once the charging is finished.

It can be the case that a fault occurs, e.g., a power connection 33 is interrupted, or a power switch 12 is stuck in a closed or open position and cannot be operated until it is repaired, When the fault is identified, the planner can reschedule with this switch always being in its stuck position as a constraint, and not anymore as a decision variable.

### Electric Vehicles On-Board of Ships or in other islanded networks

Ferries carry millions of vehicles every year to various destinations. This is a prime location for EV charging since drivers can start their trip after disembarking without waiting or searching for locations for their vehicles to charge. Throughout the duration of the voyage the ship can direct a part of its available power capacity to charge the vehicles that are carried on-board. A number of challenges have to be resolved for the ship to provide sufficient energy to the EV charging system, such as:
- Variability of available for charging Ship Power throughout the voyage
- Load dependency of Ship power-generators to fuel efficiency
- Vehicles have unknown energy requirements and charging power capabilities.

A system for resolving these challenges is described here that can do one or more of:
- Continuously estimate and predict power availability
- Schedule EV charging, accordingly, and optimise fuel efficiency for the ship generators.
- Interact via the booking system with EV drivers to collect data on their energy requirements and capabilities.

Other examples where the system can be used are isolated autonomous power grids, e.g., remote mining operations that are utilise electric vehicles in their fleet. In those cases, the power availability can also be stochastic in nature and EVs can also be charged in a schedule according to their planned operation.

An **Optimal Variable Charging System (OVCS),** presented herein, is a method for coordinating EV charging according to the anticipated power-availability of the ship and the efficiency of its electricity generating engines.

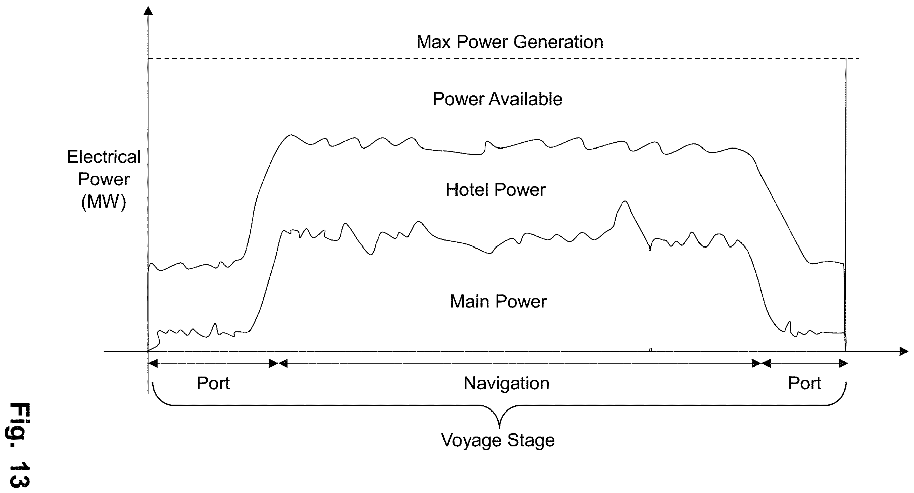

Modern ships generate electricity and distribute it to their internal grid for various functionalities. Main functions, such as propulsion, navigation systems, hydraulics, cooling and heating, etc., are considered crucial for the operation of the ship. Power is also supplied to the passengers of the ship, usually referred to as "Hotel Power", for their comfort and safety during the voyage, e.g., heat, air-conditioning, lighting, plugs for devices, freshwater production, etc. Power consumption varies according to season and weather conditions throughout the voyage. **Figure 13** shows typical trajectories of these power types, depending on whether the vessel is in port or navigating.

The power available for tertiary operations such as EV charging is what remains between the maximum generating capacity of the engines onboard, or electrical storage systems, such as batteries, and the power consumed for main functions and passenger functions.

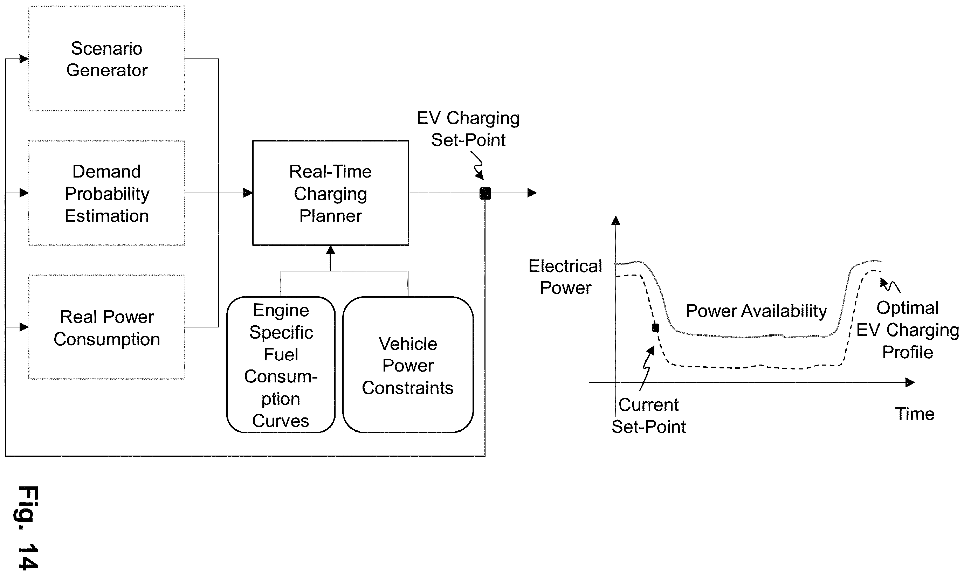

The information flow and decision-making structure of the OVCS is depicted in **Figure 14****.** In its core is the "Real-Time Charging Planner" which is a system that determines the total power to be directed to EV Charging in order to satisfy the energy requests of the EV drivers at the optimal fuel efficiency within the ship voyage. The "Real-Time Charging Planner" operates within a moving horizon optimization framework that identifies the optimal solution under constraints. Constraints here are:
- Power Availability
- Voyage Duration
- EV charging power specification

The "Real-Time Charging Planner" combines recurring information from the following subsystems of the OVCS (see **Figure 14****):**
- Scenario Generator (determines Power Availability)
- Demand Probability Estimation (determines EV energy requests)
- Real Power Consumption Measurements (provides information on the actual total power consumption of the ship).

It also collected data concerning the charging constraints of the EVs and the characteristic curves of the ship engines. Finally, the Planner incorporates information of the technical characteristics of the charging system itself (such as number of charging spots available, power rating of each EV charger, operational /non-operational subsystems).

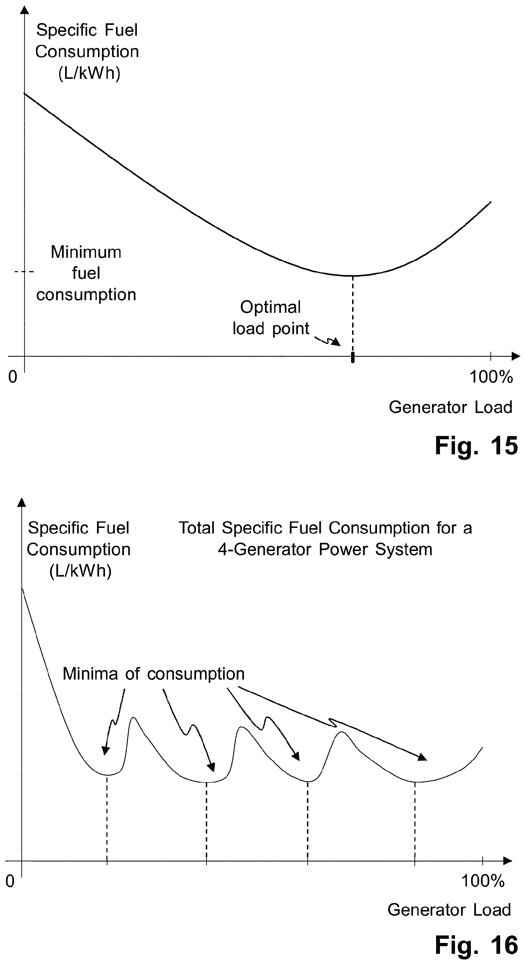

Ship engines consume fuel to generate electricity. Their specific consumption (litres of fuel per unit of energy generated) depends on the engine load. Each engine, in combination with a generator it drives, has a characteristic curve with an optimal load point where fuel consumption is minimized per energy unit produced, as shown in **Figure 15****.**

Ships can have multiple generators on board that coordinate their operation to minimize fuel consumption at various loads and not only around a single optimal point, as shown in **Figure 16****.**

The "Real-Time Charging Planner" will determine the "EV Charging Power profile" that minimizes total fuel consumption for the energy generated.

The "Real-Time Charging Planner" identifies an optimal solution as an "EV Charging Profile" for the full duration of the voyage and provides the current "set-point" to the EV Charging System. Each "set-point" determines the
- Total full power consumption of the EV Charging Network
- The individual charging power for each EV connected
The "set-point" is iterated periodically as new data arrive.

If there exists sufficient energy to cover for the EV energy demand, then the optimal charging profile is applied. If the energy demand exceeds the constraints, then the feasible solution that covers that largest portion of the EV energy demand is applied. In such a case less energy than requested is going to be supplied to the EV drivers.

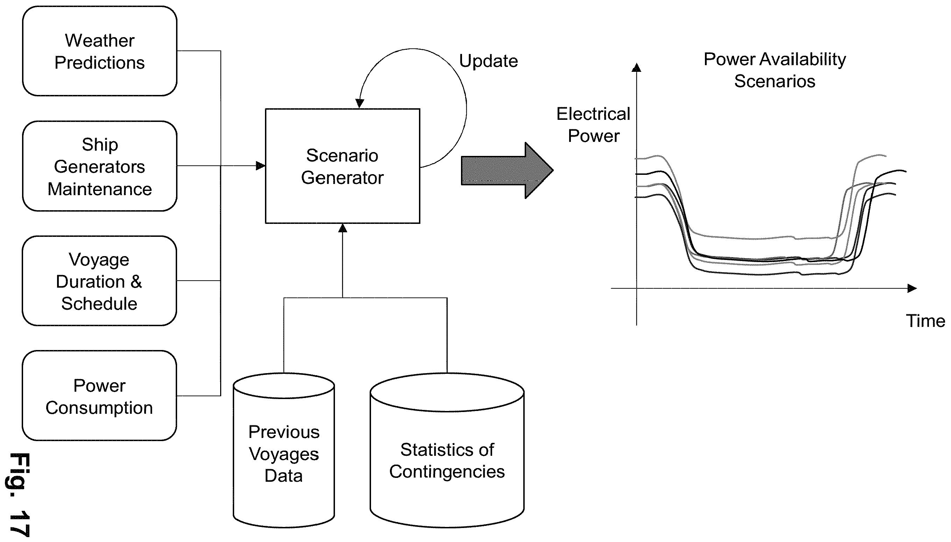

The OVCS can use a **"Scenario Generator"** to predict the availability of power according to (but not limited) weather conditions, planned operations and possible contingencies. A structure of a scenario generator is shown in **Figure 17****.**

The "Scenario Generator" can be a Machine Learning (ML) system trained on past data from previous voyages on the same route and statistics of contingencies (mechanical faults, extreme events etc). The ML "Scenario Generator" is trained to predict scenarios according to current data such as:
- Weather predictions
- Voyage Schedule
- Ship maintenance
- Power Consumption Measurements

The ML system periodically reads the available data and generates "Power Availability Scenarios" for the duration of the voyage until the ship is docked to its destination and vehicles have disembarked. Each Power Availability Scenario is an estimate of power at each time point of the voyage that can be dispensed to EV Charging.

The Power Availability Scenarios are generated before and throughout the voyage. They are used to plan the EV charging operations in the "Real Time Planning System".

In a simpler implementation, the power availability is estimated based on average measured values from previous voyages. Such values can be adapted according to the planned time in port and navigating,

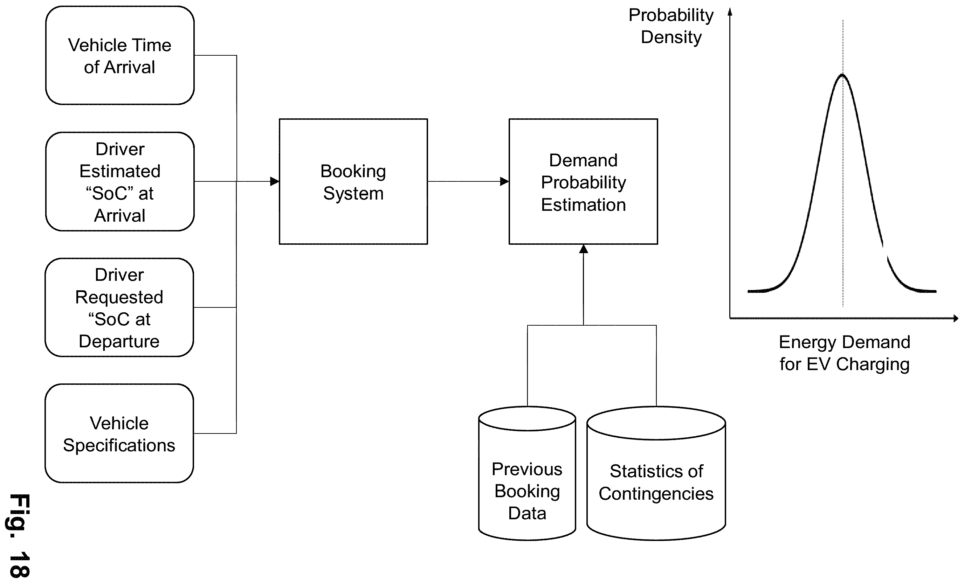

The OVCS can use a **"Demand Probability Estimation"** to predict the Energy that the EV drivers will request for their vehicles during the voyage. A structure of a demand probability estimator is shown in **Figure** 18.

The "Booking System" can be used to request information from the EV drivers such as:
- Estimated Vehicle Time of Arrival
- Estimated "Stage of Charge" (SoC) at Arrival
- Requested "Stage of Charge" at Departure (disembarking)
- Vehicle Type and Specifications

The "Demand Probability Estimator" can be an ML system training on past booking data and statistics of contingencies (vehicles not boarding, vehicles with faulty charging systems, etc) to predict the total energy demand for EV charging. This demand is also stochastic, but once the vehicles have been boarded will be finalized. Thus, the energy demand is a "point-estimate" that follows a probability distribution.

The probability distribution of the "EV Charging Energy Demand", together with the "Power Availability Scenarios" can be used in the "Real-Time Planning System".

In a simpler implementation, the demand is estimated on data from previous voyages, and adapted, e.g., by transforming or scaling, according to current circumstances. For example, if past data shows that the actual required energy is on average 10% more than the stated energy demand based on the EVs requests, then the current stated energy demand is scaled up accordingly.

EVCBs or Switching devices 1 located in a ship, or in other settings where EVs and non-EVs are present, can be arranged to be movable. This allows to move them to the location where an EV is present that requires charging. For this, the switching devices 1 can be mechanically connected to a rail and moved along the rail. Electrical connections can be via electrically conducting parts of the rail, or via cables suspended between the switching devices 1. The switching devices 1 can be arranged to be manually moved, or moved by an automatically controlled drive. The presence of an EV can be signalled by a booking system, or by driver, e.g., by requesting an EV charging service at a particular parking spot.

While the invention has been described in present embodiments, it is distinctly understood that the invention is not limited thereto, but may be otherwise variously embodied and practised within the scope of the claims.

## Claims

1. **Adaptive charging method** for generating a **charging profile** for charging a plurality of electrical vehicles (EVs) on a ferry carrying vehicles by a **charging system** that derives power from a **power source,** the charging system comprising one or more **chargers,**
the charging profile comprising, for each of the plurality of EVs, a **vehicle charging power trajectory** over time;
the method comprising the steps of
• determining an **estimated future power availability trajectory** that specifies an estimated available maximal power that is available from the power source over time;
• determining an **estimated total energy demand** for the plurality of EVs;
• performing an optimisation procedure, to determine, for an **optimisation time window,** an **optimal charging profile** subject to one or more of the following constraints:
∘ at each point of time in the optimisation time window, a total power delivered by the power source to the charging system is lower than the estimated power availability;
∘ at each point of time in the optimisation time window, and for each EV, the vehicle charging power is limited by **charging limit constraints;**
∘ for each EV, the vehicle charging power is nonzero only during a **charging time window.**

2. The adaptive charging method of claim 1, wherein the charging time window is the same for all EVs considered, and in particular is the same as the optimisation time window.

3. The adaptive charging method of claim 1 or 2, wherein the step of determining the estimated future power availability trajectory comprises the steps of a **scenario generator** determining the estimated future power availability trajectory by adapting **reference power availability trajectories** to a **voyage schedule.**

4. The adaptive charging method of claim 3, wherein the step of adapting reference power availability trajectories to a voyage schedule comprises
• retrieving a reference power availability trajectory and adapting it according to the voyage schedule.

5. The adaptive charging method of claim 3, wherein the step of adapting reference power availability trajectories to a voyage schedule comprises
• retrieving a reference power availability trajectory recorded on a previous voyage with the same voyage schedule or averaged over multiple previous voyages with the same schedule.

6. The adaptive charging method of claim 1 or 2, wherein the step of determining the estimated future power availability trajectory comprises
• determining the estimated future power availability trajectory by means of **current voyage parameters** input to a machine learning system trained to associate reference power availability trajectories recorded on previous voyages with corresponding **previous voyage parameters,** voyage parameters comprising at least a voyage schedule and one or more of
∘ weather prediction data;
∘ ship maintenance data;
∘ power consumption measurements.

7. The adaptive charging method of claim 3, wherein the voyage schedule comprises at least a time in which a vessel is in a first port, a navigation time, and a time during which the vessel is in a second port.

8. The adaptive charging method of one of claims 1 through 7, wherein the step of determining the estimated total energy demand for the plurality of EVs comprises the steps of a **demand estimator** determining the estimated total energy demand as the sum of an **estimated energy demand** for each of the plurality of EVs,
in particular, wherein the estimated energy demand is represented by a **demand probability estimation,**
and further by, for each of the plurality of EVs, determining its estimated energy demand from **vehicle data,** the vehicle data comprising
• an estimated or measured vehicle time of arrival;
• an estimated or measured "Stage of Charge" (SoC) at arrival;
• a targeted "Stage of Charge" at departure;
• a vehicle type and specifications.

9. The adaptive charging method of claim 8, wherein the step of determining the estimated energy demand comprises
• summing, over all vehicles, a difference between the state of charge at departure and at arrival.

10. The adaptive charging method of claim 8, wherein the step of determining the estimated energy demand comprises
• scaling or transforming measured energy demand from previous voyages according to current vehicle data.

11. The adaptive charging method of claim 8, wherein the step of determining the estimated energy demand comprises
• by means of the vehicle data input to a machine learning system trained to associate energy demand recorded on previous voyages with corresponding previous vehicle data.

12. The adaptive charging method of one of claims 1 through 11, comprising the steps of, as the charging takes place during the optimisation time window, **iteratively repeating** the optimisation procedure, with as additional input measurements of at least an **actual power availability** measured up to a current point in time, thereby in each iteration determining an updated optimal solution for the charging profile.

13. The adaptive charging method of one of claims 1 through 12, wherein the optimisation procedure takes into account an objective function that is a function of an amount of fuel consumed to generate electricity.

14. The adaptive charging method of claim 13, wherein the objective function comprises a relationship between specific fuel consumption and a load of one or more generators constituting the power source that has one or more minima.

15. A **charging network** installed on a ferry for carrying vehicles, comprising movable connection devices, each connection device providing an electrical connection for charging an electrical vehicle (31) the movable connection devices being arranged to be moved to a charging position corresponding to a position of an electrical vehicle (31) to be charged,
in particular wherein the movable connection devices are arranged to be moved along a linear mounting, in particular a rail,
in particular wherein the movable connection devices are movable by means of a drive system.

16. The charging network of claim 15, wherein one or more of the connection devices are **switching devices** (1) for charging an electrical vehicle (EV) comprising at least
a **first power terminal** (111) for connecting the switching device (1) to a first power connection (33),
a **second power terminal** (112) for connecting the switching device (1) to a second power connection (33), and
an **EV power terminal** (113) for connecting the switching device (1) to an EV power cable (32) for charging an electrical vehicle,
**power switches** (12) arranged to selectively connect the power terminals (111, 112, 113),
a control unit (14) arranged to control the power switches (12),
a communications unit (142) configured to communicate with at least other switching devices (1),
and optionally an EV interface unit (143) configured to communicate with an electrical vehicle (31) connected to the switching device (1).

17. A data processing system programmed to perform the method according to one of claims 1 to 14.

18. A computer program loadable into an internal memory of a computer, comprising computer program code to make, when loaded and executed in the computer, the computer execute the method according to one of claims 1 to 14.

19. A non-transitory computer readable medium comprising computer readable program code encoding a computer program that, when loaded and executed on a computer, causes the computer to execute the method according to one of claims 1 to 14.

20. A reproducible computer-readable signal encoding a computer program that, when loaded and executed on a computer, causes the computer to execute the method according to one of claims 1 to 14.

21. Method of manufacturing a non-transitory computer readable medium, comprising the step of storing, on the computer readable medium, computer-executable instructions which when executed by a processor of a computing system, cause the computing system to perform the method steps of one of claims 1 to 14.
